# EUROPEAN PATENT APPLICATION

(11) **EP 3 883 165 A1**
(43) Date of publication of application: **22.09.2021**
(21) Application number: 20163765.9
(22) Date of filing: 17.03.2020
(51) Int. Cl.: H04L 5/00

(54) **METHOD FOR SCHEDULING OF NETWORK RESSOURCES FOR REDUCED CAPABILITY USER EQUIPMENTS**

(71) Applicant: THALES DIS AIS Deutschland GmbH, 81541 München (DE)
(72) Inventor: BREUER, Volker, 16727 Boetzow (DE)
(74) Representative: Grevin, Emmanuel

(57) **Abstract**

The present invention relates to a method to operate a base station being part of a cellular network, the base station serving a plurality of user equipments, wherein the plurality of user equipments comprises those which are qualified as reduced capability user equipment, and the base station is capable of applying at least one subcarrier spacing to a supported frequency band, wherein for operating a reduced capability user equipment the method comprises the steps of:
- ascertaining a capability information from said user equipment including an indication of maximum number of supported subcarriers,
- determining the scheduling bandwidth for said user equipment taking into account the indicated maximum number of supported subcarriers and the at least one subcarrier spacing,
- transferring information to said user equipment considering said determined scheduling bandwidth.

## Description

### FIELD OF THE INVENTION

The present invention relates to a method for a base station. The invention also pertains to a base station using said method. The invention further relates to a method for a user equipment operating with said base station. The invention also pertains to a user equipment using said method. Additionally the invention relates to a network element.

### BACKGROUND OF THE INVENTION

In the field of wireless communication by now user equipments were known that are either operating the full bandwidth provided by a base station of the cellular network that they are working in, or only reduced bandwidth. For LTE devices supporting CAT-1 or higher, the full bandwidth is covered, while in Cat-M or NB-loT only a subset of e.g. 1,4 MHz respectively 200kHz are processed. These are so-called bandwidth-reduced (BR) devices.

For the new standard of 5G / New Radio (NR) a new type of device is suggested called reduced capability (REDCAP), or capability reduced devices. These are qualified to be capability reduced when they are only capable to process a subset of a full bandwidth provided by a base station.

However in 5G it is further envisaged to have a flexible layer 1, which means that the subcarrier spacing may vary in the range of 15/30/60kHz for frequency range 1 (FR1). In FR2, which is above 6GHz, the subcarrier spacing is 120/240/480kHz. This means that for one base station in parallel a deployment using said different subcarrier spacings is foreseen.

With that a user equipment that is capable of supporting e.g. 512 subcarriers would cover depending on the subcarrier spacing of the assigned subcarriers a frequency bandwidth between 9 and 30MHz in FR1, based on a spacing of 15KHz or 60kHZ.

It is obvious that the scheduling of reduced capability user equipments in frequency ranges with varying subcarrier spacing is a new tasks that requires solutions that are not yet available in the legacy cellular wireless communication standards.

It is therefore the goal of present invention to propose a solution for an improved scheduling of reduced capability user equipments in such environment.

Further alternative and advantageous solutions would, accordingly, be desirable in the art.

### SUMMARY OF THE INVENTION

For this it is according to a first aspect of the invention suggested a method for a base station according to claim 1. It is further suggested according to a second aspect of the invention a base station according to claim 9. According to a third aspect of the invention it is suggested method for a user equipment according to claim 15. In the fourth aspect of the invention it is further suggested a user equipment according to claim 17. In a fifth aspect of the invention it is suggested a cellular network element according to claim 18.

According to the first aspect of the invention it is proposed a method to operate a base station being part of a cellular network, the base station serving a plurality of user equipments, wherein the plurality of user equipments comprises those which are qualified as reduced capability user equipment, and the base station is capable of applying at least one subcarrier spacing to a supported frequency band, wherein for operating a reduced capability user equipment the method comprises the steps of:
- ascertaining a capability information from said user equipment including an indication of maximum number of supported subcarriers,
- determining the scheduling bandwidth for said user equipment taking into account the indicated maximum number of supported subcarriers and the at least one subcarrier spacing,
- transferring information to said user equipment considering said determined scheduling bandwidth.

The first aspect of the invention relates to a base station being part of a cellular network. The cellular network is one that is supporting at least one of the technology standards of 4G (LTE), 5G (New Radio = NR) and/or beyond. It comprises a plurality of base stations.

The base station is foreseen to communicate via the air-interface with a plurality of user equipments.

For doing so, the base station deploys scheduling on at least one supported frequency band that is assigned to the base station. For the case of frequency division duplex signalling the uplink (UL) transmissions are carried out in a separate frequency band than for the downlink (DL). In the time division duplex signalling UL and DL are handled on the same frequency band, separated by time.

The base station is further capable of supporting so-called reduced capability user equipments. These are in particular operating as LTE-Cat-3/Cat-4 equivalent in New Radio, and this concept is called NR-light or NR-REDCAP (reduced capabilities).

According to that a user equipment is qualified as reduced capability in case it is incapable of supporting all subcarriers across the full frequency band supported by the base station.

That means in effect a reduced capability user equipment is one, that is capable of operating only in a fraction of the bandwidth of the supported frequency band of the base station. This is due to that the transceiver of the user equipment is only capable to process in parallel a limited number of supported subcarriers.

Each user equipment needs to process in parallel a respective number of subcarriers. Means a non-REDCAP user equipment needs to process all subcarriers of the supported frequency band of the base station in parallel, which obviously requires sufficient processing power.

However, for scheduling of data transmissions to a user equipment the base station calculates the available frequency range and duration in order to identify the needed resources, in particular PRBs for that transmission.

With NR it is the first time that the subcarrier spacing in frequency is variable. That means, unlike previous standards, a subcarrier in 5G does not have anymore the same addressed frequency range. Moreover a base station may deploy in parallel different subcarrier spacing.

However that poses a challenge for the base station to schedule the data transmission for said user equipment. Here is where the inventive method comes into play.

As a first method step the base station ascertains a capability information from the user equipment. This at least comprises the maximum number of supported subcarriers. This is the mentioned limitation that defines a NR-REDCAP user equipment. This information therefore needs to be shared with the serving base station.

Additional information are preferably stored with the capability information of the user equipment and are likewise ascertained by the base station.

The step of ascertaining these capability information may be carried out in a plurality of ways. A first way is to receive, in particular on occasion of the registration of the user equipment on the cell, the capability information by way of signalling.

Alternatively the capability information are already available at another base station, where in particular the user equipment started to operate after powering up or reaching the coverage area of the cellular network. During the process of handover or cell-reselection such capability information are made available to the base station in question.

Further it is foreseen to store this information in the cellular network, in particular as part of the HSS/HLR. Of course this requires to monitor the IMEI, should the same subscription be used in different user equipment, e.g. through changing the removable USIM from one user equipment to the other.

Apart from this implication, the maximum number of supported subcarrier is preferably a constant value for a given user equipment. In that case the capability information relating to the maximum number of supported subcarriers does not need to be requested with each interaction of the user equipment with the base station.

As a matter of fact the following steps are preferably carried out in timewise conjunction with an imminent data exchange session.

The first step comprises to determine the scheduling bandwidth for said user equipment. The scheduling bandwidth defines the size and position of the fraction of the totally supported frequency bandwidth of the base station, that the user equipment is expected to receive and decode.

While in the known systems, like LTE Cat-1 and above, the user equipments are expected to read the whole frequency band, and identify through control information either in the MIB, or in the first control signals of a PRB, which of the received data are reserved for the user equipment, in the situation of a reduced capability user equipment this procedure does not work out anymore. Therefore additionally to the control signals the user equipment needs to know which fraction of the supported frequency band of the base station the user equipment needs to monitor in order to receive all data assigned the user equipment.

This determination is in this situation carried out first taking into account the maximum number of supported subcarriers. This is the information ascertained in the previous step.

Additionally the determination step takes into account the at least one subcarrier spacing of the base station, that is currently applied.

This is a variable value, which can change depending upon the addressed frequency range. E.g. defined for NR are FR1 (up to 6 GHz) and FR2 (above 6 GHz).

For FR1 the values for 15/30/60kHz per subcarrier are defined by now as subcarrier spacing value. For FR2 the values of 120/240/480kHz are defined. It becomes obvious that for a user equipment with x supported subcarriers in parallel the amount of data to be transmitted can vary by the factor 4 (per FR). Thus it is of utmost importance to consider the subcarrier spacing when assigning resources for data exchange to the user equipment, in order not to waste resources resp. to assure that the assigned resources are really available.

Hence it is important to consider for the determination step both the maximum supported subcarriers and the assigned at least one subcarrier spacing.

When the base station is at the same time deploying more than one subcarrier spacing, it is preferably defined first a candidate scheduling bandwidth. When this is in an area with an identical subcarrier spacing, then this is to be applied, and the final scheduling bandwidth is derived from the candidate scheduling bandwidth.

According to an advantageous embodiment the situation of overlapping the candidate scheduling bandwidth on at least two subcarrier spacing is addressed. According to that it is proposed that the base station supporting at least two subcarrier spacings, comprising that in case a candidate scheduling bandwidth covers an area with more than one different subcarrier spacings, the step of determining the scheduling bandwidth comprises taking into account the smallest of the at least two subcarrier spacings.

In that case of an overlap of the candidate scheduling bandwidth over two subcarrier spacing ranges, then the smallest of the at least two subcarrier spacings is considered.

That leads e.g. in the case of 15 and 30 MHz and a UE capable of processing four parallel subcarriers to the situation that effectively three subcarriers are used for assigning resources in the scheduling bandwidth. In total the three subcarriers have already the size of four subcarriers in the 15 MHz spacing, in total a determined scheduling bandwidth of 60 MHz. That size is possible with 4 subcarriers in 15 MHz, with 2 subcarriers in 30 MHz, or - in a mixed deployment - 2 subcarriers in 15 MHz and 1 in 30 MHz.

This latter option is the three subcarriers mentioned above. Effectively the technical capabilities of the user equipment would then be used only partly. However, this is more feasible in applying the structure, than alternative options, which allow adding another subcarrier with the larger spacing. This would require additional checks, if the subcarrier spacing is accurate there etc. The 4 subcarrier example above is used for simplicity as in reality a user equipment will always support as a minimum the number of subcarriers required for broadcast BCH/MIB acquisition. The broadcast is transmitted over the inner 20RBs (resource block in LTE) means using 0 to 239 subcarriers (20RBs x 12 subcarriers). Means avoiding the need of providing additional broadcast information which are needed to acquire the NR cell also a reduced capability user equipment will support at least 240x15kHz bandwidth means for SIB /MIB acquisition in idle mode. However, smaller bandwidth processing user equipments, like in NB-loT in relation to LTE, are not in general precluded but would require a new resp. additional BCH structure which e.g. has only the width of the PSS and SSS (Primary and Secondary Synchronization Channel). Once the envisaged scheduling bandwidth is determined, it is transferred an information to said user equipment considering said scheduling bandwidth. That comprises an indication as part of the resource allocation that the user equipment needs to know in which frequency range it is expected to operate, in particular both in uplink and in downlink direction.

The subcarrier spacing applied by the base station is signaled to the user equipment. In current implementation it is the master information block (MIB) that indicates the subcarrier spacing for system information block 1 (SIB1), while the SIB1 comprise the subcarrier spacing for all other parts of the full bandwidth of the base station. In other words, the signalling of the applied subcarrier spacing is preferably signaled by way of broadcasting.

The user equipment always monitors a certain part of the entire bandwidth for the scheduling information, this also applies to reduced capability user equipments. The user equipments are requested to monitor a certain part in accordance to their capabilities, which could vary over the full bandwidth depending on actual frame number and user equipment's identity.

These monitoring is in particular done based on a pre-agreed/known method. However as UL and DL have a certain relation it is important to clarify which DL area has to be monitored when being assigned certain UL resources.

In a further advantageous embodiment it is proposed that the step of determining the scheduling bandwidth comprising the step of identifying a plurality of subcarriers with slots that are free to be allocated to a user equipment, wherein the plurality of subcarriers considers the indicated maximum number of supported subcarriers.

This embodiment adds another factor to be considered for determining the scheduling bandwidth. This is the availability for allocating subcarriers, at least for certain time slots, to a user equipments.

By now the allocated resources could be chosen from everywhere in the supported frequency band of the base station. This does not work out anymore, when the user equipment is only capable of processing a few of the whole set of subcarriers of the base stations supported frequency bandwidth. This embodiment also includes that the assigned subcarriers need preferably to allow a respective amount of data to be transmitted. This is in relation to the imminent data exchange session. That leads in case of a high data amount to favor the wider subcarrier spacing. If the submission time is not crucial however a lower subcarrier spacing is as well good, provided it is free to be allocated.

That makes clear that according to this embodiment the base station can taking into account the needs of the user equipment, for carrying out the allocation, and consequently scheduling bandwidth. Such needs are in particular exchanged as part of the capability information.

According to a preferred embodiment it is proposed that in non-consecutive assignments to the user equipment the step of determining of the scheduling bandwidth comprises considering the whole bandwidth between the lowest and highest scheduled subcarrier as part of the maximum number of supported subcarriers.

This embodiment suggests that the user equipment is not only capable of decoding consecutive subcarriers, that means without any gaps. But this might also be distributed over the whole supported frequency bandwidth of the base station. This is in particular advantageous when no consecutive amount of free to be allocated subcarriers are available at a time.

In that case the step of determining the scheduling bandwidth is working that way that the highest and lowest scheduled subcarriers of the non-consecutive selection is evaluated. This difference must not exceed the maximum number of supported subcarriers of the user equipment.

That means if the user equipment supports e.g. up to 8 subcarriers, then a non-consecutive assignment may lead to assign subcarrier number 24-26, 30-31. In total 5 subcarriers are then used for allocation, the determined bandwidth consequently covers the range between subcarriers 24 and 31.

In a further advantageous embodiment it is suggested that the ascertained capability information additionally includes an information indicative at least of one of the group of:
- the maximum supported subcarrier spacing,
- the supported group of subcarrier spacings,
- a maximum required processing time,
- a supported fixed subcarrier spacing,
- a supported subcarrier spacing per frequency range.

This embodiment suggests that besides the maximum number of supported subcarriers also additional user equipment related information are preferably made available as part of the capability information to the serving base station. The maximum supported subcarrier spacing indicates in which subcarrier spacing area a resource allocation may happen. This is in particular advantageous if more subcarrier spacings as currently defined should be made available in the future. Here a physical limitation of the transceiver might be applied.

The supported group of subcarrier spacings is an alternative information to the base station, which subcarrier spacings may be used. Normally this would be consecutive, however with this variant future use cases might be applied. With the maximum required processing time the user equipment indicates to the base station the capability of processing data submitted within one or a plurality of subcarriers. In particular for reduced capability user equipments with low operating power here a limitation might be taken into account. This is preferably consequently translated into a maximum number of supported subcarrier spacing, hence it is another way of making this information available to the base station. The spacing is consequently a function of time: the larger the spacing, the shorter the processing time per data packet that the user equipment needs to be able to deliver.

Additionally or alternatively a supported fixed subcarrier spacing is part of the capability information. This is an option to inform the base station that only a fixed subcarrier spacing is supported by the user equipment, and therewith to take into account for determining the scheduled bandwidth.

Further a supported subcarrier spacing per frequency range is suggested as additional information as part of the capability information. This is in particular a set of information for the frequency ranges FR1 and FR2 to inform, which subcarrier spacings per frequency range are supported. This allows a very flexible information about the capabilities to cope with different subcarrier spacing by the user equipments.

In a further preferred embodiment it is further suggested the step of transferring the ascertained capability information to the neighbor base station in the case of handover or multicarrier scheduling.

This embodiment assures that for a moving user equipment for which in particular a handover is carried out, the base station - in particular as part of the handover - informs the targeted neighbor base station about the ascertained capability information of the respective user equipment, that is currently in the handover process.

This helps reducing the signalling between the neighbor base station, and the running connection can be seamlessly continued without interruption. This brings the neighbor base station in the position to server the user equipment the way it is capable to operate.

This also applies to multicarrier scheduling, when an additional base station is involved in serving the user equipment, that this additional base station also gets transferred from the serving base station the ascertained capability information.

For the neighbor base station this reception of the capability information is one of the encompassed embodiments of ascertaining the capability information of the user equipment, as it is suggested for the inventive method.

In another advantageous embodiment it is proposed the step of amending the applied subcarrier spacing in consideration of the number of reduced capability user equipment operating in at least parts of the cellular network.

This embodiment relates to an adaptation of the applied subcarrier spacing for one or more base stations. In consideration of the reduced capability user equipment it might be advantageous to monitor if there is a high request of a certain subcarrier spacing of the base station.

In that case such monitoring is according to this embodiment used to amend the subcarrier spacing - at least temporary - in order to better suit the requested subcarrier spacings.

If there are a lot of reduced capability user equipments, with reduced needs in terms of data transmissions, then for those user equipments it would be fully sufficient to increase the range with the smallest subcarrier spacing, if this helps to serve them. However also other user equipments operating on the base station need to be considered as well.

This is a regular task that is preferably carried out under analysis of the usage of the base station, and if this usage remains stable. In particular when in the cell area of a base station a certain amount of bandwidth-reduced user equipments are installed, then this is a situation where preferably the suggested embodiment shall help adjusting the base station configuration to the changed needs of its served user equipments.

According to the second aspect of the invention it is proposed a base station being part of a cellular network, the base station serving a plurality of user equipments, wherein the plurality of user equipments comprises those which are qualified as reduced capability user equipment, and the base station is capable of applying at least one subcarrier spacings to a supported frequency band, wherein for operating a reduced capability user equipment the base station is configured to:
- ascertain a capability information from said user equipment including an indication of maximum number of supported subcarriers,
- determine the scheduling bandwidth for said user equipment taking into account the indicated maximum number of supported subcarriers and the at least one subcarrier spacing,
- transfer information to said user equipment considering said determined scheduling bandwidth.

This aspect of the invention relates to a base station being part of a cellular network.

It is preferably equipped with transmitting and receiving circuitry, and at least one antenna. It comprises further processing circuitry to control the transmitting and receiving circuitry. It further comprises preferably volatile and permanent memory at least for holding operating software and configuration data.

The base station is further equipped with communication circuitry for communicating with network elements, like MME or AMF, of the cellular network it belongs to. That communication circuitry is in particular set up wired. The base station is configured to support the technology standard of LTE (4G) for non-standalone operation, or of New Radio (NR, 5G), or beyond.

Directly or indirectly the base station has further communication circuitry for communicating with a second base station preferably of a similar type.

The base station is configured to serve a plurality of user equipments, among these reduced capability user equipments. For that it employs at least one supported frequency band.

It is further configured to apply at least one subcarrier spacing to the supported frequency band. That means that the base station may be flexible in the subcarrier spacing over the at least one supported frequency band.

This encompasses that at the same time one subcarrier spacing is applied, as well that at the same time two or more subcarrier spacings are applied.

The base station is configured to ascertain capability information from at least one of the base stations that are operating with the base station.

The second aspect of the invention shares the advantages of the first aspect.

According to the third aspect of the invention it is proposed a method for a user equipment configured to operate with a base station being part of a cellular network, the user equipment being qualified as reduced capability user equipment, the method comprises the steps of:
- submitting to said base station a capability information indicating a maximum number of supported subcarriers,
- receiving from said base station an indication relating to determined scheduling bandwidth.

This aspect of the invention relates to a user equipment operating with a base station according to the second aspect of the invention. It is moreover a user equipment that is qualified as reduced capability user equipment.

That means it is capable of processing a limited number of subcarriers of the plurality of subcarriers provided by a serving base station.

The user equipment for being well served by the base station submits to said base station - indirectly or directly - a capability information indicating a maximum number of supported subcarriers.

This is informing the base station, what is the number of subcarriers in that the base station may carry out the scheduling for data exchanges between base station and the user equipment.

Consequently according to this method the user equipment receives from the base station an indication of the determined scheduling bandwidth. This is preferably taken into account the submitted maximum number of subcarriers and the applied at least one subcarrier spacing of the base station, as it is suggested in the first aspect of the invention.

With this received information the user equipment is in the position to only read and decode the signals from the base station in the received determined scheduling bandwidth.

Within this scheduling bandwidth the user equipment may acquire all necessary information for figuring out where the allocated resources are scheduled. This leads to a reliable data exchange between the user equipment and the base station without a loss of information, although the user equipment only considers a fraction of the full supported bandwidth of the serving base station.

According to a fourth aspect of the invention it is proposed a user equipment configured to operate with a base station being part of a cellular network, the user equipment being qualified as reduced capability user equipment, the user equipment further being configured to:
- submit to said base station a capability information indicating a maximum number of supported subcarriers,
- receive from said base station an indication relating to determined scheduling bandwidth.

This aspect relates to a user equipment for operating in cellular networks according to one or more of the technology standards of 2G, 3G, 4G, 5G or beyond.

The user equipment is equipped with a communication unit, in particular comprising transmitting and receiving circuitry, preferably a transceiver. It further comprises processing circuitry for controlling the transceiver and potential other components of the user equipment. Further the user equipment preferably has a memory unit, either or both for permanent and volatile storage of data, in particular operating software and configuration data like a list of candidate frequency bands, and a power supply, in particular a (chargeable) battery. Said memory unit is in particular either part of the user equipment or the user equipment has access to it.

The user equipment is preferably configured to be communicatively coupled to at least one subscriber identity unit, that means (U)SIMs, (e)UICCs, and other types of chip cards, either removable or soldered, or as part of another component like a baseband chip.

The user equipment is therefore configured to operate within a cellular network on a base station in at least one radio access technology, resp. category, like NB-IoT, LTE Cat-M etc.

The user equipment is further configured to operate as a reduced capability user equipment.

The fourth aspect of the invention shares the advantages of the third aspect.

According to the fifth aspect of the invention it is proposed a network element of a cellular network, said network element maintaining a set of capability information assigned to a user equipment operating with a first base station of said cellular network, wherein the network element is configured to providing said set of capability information to a second base stations in case the user equipment is about to reselect to said second base station.

This aspect relates to the network element of a cellular network for serving user equipments. The cellular network is preferably configured to support one or more cellular technology standards, in particular 4G and 5G.

The network element is in particular an MME (Mobile Management Entity) or an AMF (Access and Mobility Management Function), which are components of 4G resp. 5G core networks.

These have according to this aspect of the invention the capability to make available previously received capability information from a user equipment according to the fourth aspect of the invention to a (second) base station according to the second aspect of the invention.

This is for the case of a reselection, which is a change of a cell for a user equipment when operating in idle resp. unconnected mode. In that case the second base station receives no information from the previously serving base station, as it is suggested in case of a handover situation as one embodiment of the second aspect of the invention.

Preferably the network element maintains the set of capability information for a plurality of user equipments by means of other core components of the cellular network, like a HSS/HLR.

Hence with a network element as configured in this aspect of the invention an additional signalling between the user equipment and the second base station may be avoided, which would in the normal course of action not differ from capability information made available for the base station where the user equipment previously camped on, and the one before, and so on.

Hence it is advantageous to use the network element for exchanging this information to the base stations, where the respective user equipment is camping on.

As it is shown this invention advantageously solves the depicted problem and offers an advantageous way to schedule reduced-capability user equipment in a mixed deployment of subcarrier spacings of a base station.

### BRIEF DESCRIPTION OF THE DRAWINGS

The following description and the annexed drawings set forth in detail certain illustrative aspects and are indicative of but a few of the various ways in which the principles of the embodiments may be employed. Characteristics and advantages of the present invention will appear when reading the following description and annexed drawings of advantageous embodiments given as illustrative but not restrictive examples.
- Fig. 1: represents an exemplifying situation of a subcarrier spacing of base station as an embodiment of this invention;
- Fig. 2: represents a flow chart with an exemplifying embodiment of the inventive method;
- Fig. 3: shows in an exemplifying embodiment of the invention determined scheduling bandwidths in a mixed subcarrier spacing;
- Fig 4a + 4b: show in a exemplifying scheduling from a base station.

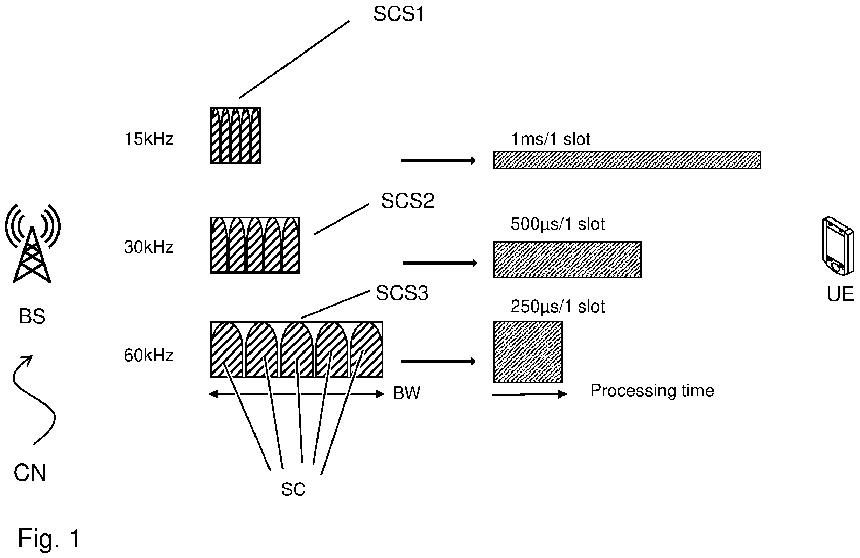

FIG. 1 schematically shows a for a base station BS a plurality of exemplifying subcarrier spacing SCS1-SCS3 of the type to which the present invention is applied as an embodiment.

The base station BS is part of a cellular network CN. The user equipment UE is camping on the base station BS. The user equipment UE is in particular a reduced capability user equipment, like defined in the NR-REDCAP resp. NR-light proposals in 5G standardisation.

According to the currently defined frequency ranges in 5G, there are at least three different subcarrier spacings SCS1-SCS3 preconfigured. They differ in the size per subcarrier SC. Shown here is the subcarrier spacing for FR1, which leads to subcarrier spacing SCS1 with a bandwidth BW of 15 kHz, subcarrier spacing SCS2 of 30 kHz, and subcarrier spacing SCS3 of 60 kHz. For the processing time of the same amount of data this means the indicated boxes on the right side. Here it becomes apparent, that the processing time linear decreases with the increase in subcarrier spacing SCS.

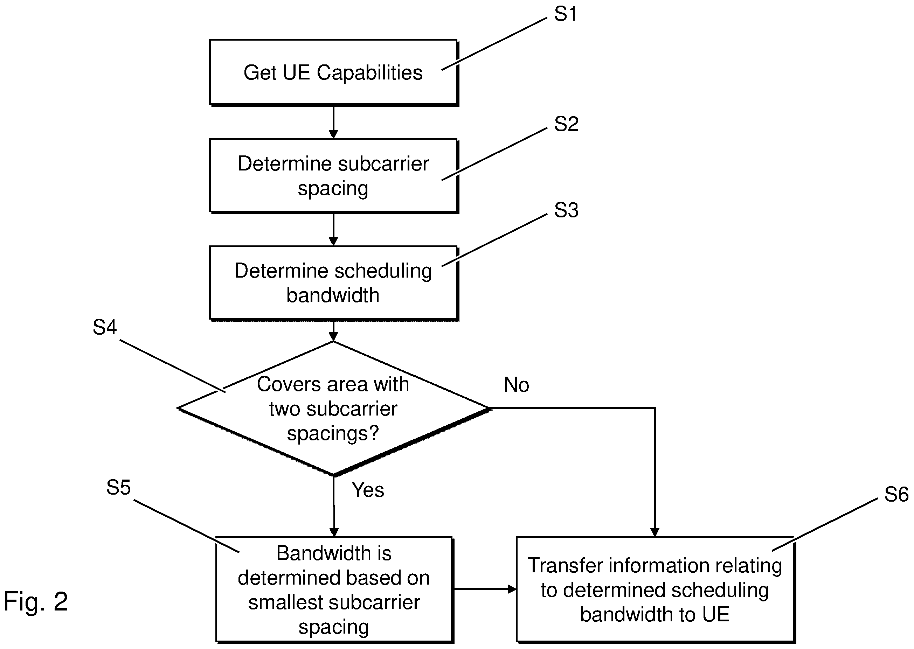

In FIG. 2 a flow chart shows the method steps for a base station in an exemplified embodiment of the invention.

It starts with step S1 where the base station gets capabilities of a user equipment that is camping on the base station. That includes in the simplest form receiving an information message, but that may also be the case through other network elements or another base station, in particular those where the user equipment was previously camping on.

The capability information includes at least the indication about the maximum number of supported subcarriers SC. That may be provided in different ways, including a frequency bandwidth in the lowest subcarrier spacing SCS.

Also additional information may be submitted which influence the scheduling of the base station in the next method steps. This includes a maximum subcarrier spacing, which subcarrier spacings are supported, in particular in which frequency range etc. Further it may be indicated QoS (quality of service) information of the user equipment, like if it expects time critical data transmission or the average size of data transmissions.

The base station determines in step S2 the currently deployed subcarrier spacings. This is a result of the currently applied scheduling, which is either decided independently from the base station, or in conjunction with other network elements. In a simple variant, only one subcarrier spacing is applied (like it is today in legacy RATs), alternatively more than one subcarrier spacings are available in parallel.

Within step S3 then the scheduling bandwidth SBW is determined. This is the method step where all available information are compiled and considered.

In the shown exemplifying case the base station is capable of a mixed subcarrier spacing SCS, preferably the determined scheduling bandwidth in this step is a candidate scheduling bandwidth, due to the fact that it may cover the area of two subcarrier spacings.

If this is the case is checked in decision step S4. Should it not be the case, then the candidate scheduling bandwidth may be accepted without a change as the subcarrier spacing SCS which is to be transmitted to the user equipment in step S6.

Should the candidate scheduling bandwidth cover (at least) two subcarrier spacings SCS, then the determined candidate bandwidth needs to be revised, by taking into account the smallest of the involved subcarrier spacings.

The result of that step is then transmitted in step S6 to the user equipment. This transmission in particular is carried out as part of the scheduling information. The subcarrier spacing applied by the base station is signalled. In the master information block (MIB) the information element named *subCarrierSpacingCommon* indicates the subcarrier spacing for the first system information block SIB1. It can have values of 15 and 30 kHz valid for carrier frequencies lower than 6GHz, and values of 60 and 120 kHz are applicable for carrier frequencies larger than 6GHz. Additionally the SIB1 contains the information element *FrequencylnfoDL-*SIB*,* that provides basic parameters of a downlink carrier and transmission thereon. Such parameters consists of *frequencyBandList* which is a list of one or multiple frequency bands to which this carrier(s) belongs, *scs-SpecificCarrierList* which is set of carriers for different subcarrier spacings SCS.

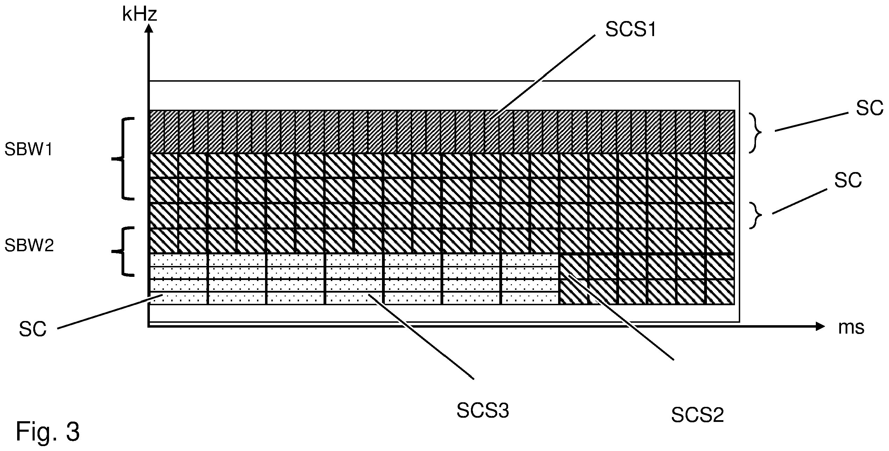

In FIG. 3 it is exemplarily shown how in a frequency/time-diagram a mixed subcarrier spacing SCS for a base station BS may look like. It is visible that the most narrowest subcarrier spacing SCS3 in the lower part only lasts a limited period. That means, that generally the subcarrier spacing is not only flexible in the frequency resp. subcarrier direction, but also in time. Preferably it stays constant for some time, which eases the scheduling task.

It is further shown in this diagram the result of the inventive method as shown in Fig. 2 when a mixed deployment is available and the determined scheduling bandwidth is placed in two different subcarrier spacings.

Here the first scheduling bandwidth SBW1 was determined in the widest and the second widest subcarrier spacing SCS1 and SCS2. Each line represents one subcarrier SC.

Here it is shown the results of the determination for a user equipment capable of processing 4 subcarriers in parallel.

Now through the determination of the scheduling bandwidth SBW1 over the two different subcarrier spacings SCS1 and SCS2 the scheduling bandwidth effectively only involves three subcarriers: two of subcarrier spacing SCS2 and one of subcarrier spacing SCS1.

In terms of determined scheduling bandwidth SBW1 however, the size is oriented on the smallest subcarrier spacing SCS2, which means that would the determined scheduling bandwidth SBW be in the field where only the subcarrier spacing SCS2 is deployed, it would exactly cover the frequency bandwidth covered by four subcarriers, according to the capability of the user equipment.

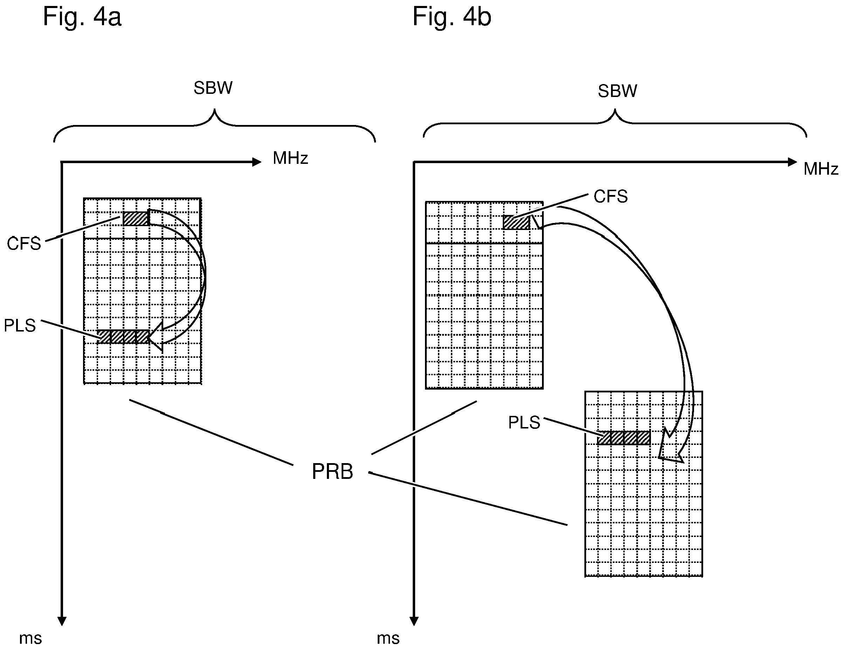

In FIG 4a. and FIG 4b it is shown in what way the scheduling is carried out for a user equipment with respect to the determined scheduling bandwidth SBW, Here are shown physical resource blocks PRBs of the base station in a frequency-time diagram. These provide a given set of symbols and subcarriers.

With the determined scheduling bandwidth SBW the user equipment is informed what frequency range needs to be read and decoded.

However the scheduling is done through control field symbols CFS, which carry for a user equipment the information where in the data section the payload symbols PLS are to be found.

In Fig. 4a this is done in the same PRB. That means the user equipment needs to process the control field symbols, which lasts three symbols, and then figures out which payload symbols are allocated to the user equipment in the same PRB.

In Fig. 4b this is done in a separate and later PRB. As it is shown this may not necessary use the same subcarriers.

It is only important that the scheduling is carried out that way, that it remains within the determined scheduling bandwidth SBW and uses not more than the maximum number of subcarriers the user equipment is capable of handling. Should in this case the subcarriers lying between the two shown PRBs in the frequency dimension not be deployed, then they can be ignored in the scheduling. However the most right and the most left subcarrier need to be considered to evaluate the full scheduling bandwidth, as non-consecutive deployment.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Method to operate a base station (BS) being part of a cellular network (CN), the base station serving a plurality of user equipments (UE), wherein the plurality of user equipments comprises those which are qualified as reduced capability user equipment, and the base station (BS) is capable of applying at least one subcarrier spacing (SCS) to a supported frequency band,
wherein for operating a reduced capability user equipment (UE) the method comprises the steps of:
- ascertaining a capability information from said user equipment (UE) including an indication of maximum number of supported subcarriers (SC),
- determining the scheduling bandwidth (SBW) for said user equipment (UE) taking into account the indicated maximum number of supported subcarriers (SC) and the at least one subcarrier spacing (SCS),
- transferring information to said user equipment (UE) considering said determined scheduling bandwidth (SBW).

2. Method according to claim 1,
wherein a user equipment (UE) is qualified as reduced capability in case it is incapable of supporting all subcarriers (SC) across the full frequency band supported by the base station (BS).

3. Method according to at least one of the claims 1 or 2,
wherein the base station (BS) supporting at least two subcarrier spacings (SCS1, SCS2),
comprising that in case a candidate scheduling bandwidth covers an area with more than one different subcarrier spacings,
the step of determining the scheduling bandwidth (SBW) comprises taking into account the smallest of the at least two subcarrier spacings (SCS2).

4. Method according to at least one of the claims 1 to 3,
wherein the step of determining the scheduling bandwidth (SBW) comprising the step of identifying a plurality of subcarriers with slots that are free to be allocated to a user equipment (UE),
wherein the plurality of subcarriers (SC) considers the indicated maximum number of supported subcarriers.

5. Method according to at least one of the previous claims,
wherein the ascertained capability information additionally includes an information indicative at least of one of the group of:
- the maximum supported subcarrier spacing (SCS),
- the supported group of subcarrier spacings (SCS),
- a maximum required processing time,
- a supported fixed subcarrier spacing (SCS),
- a supported subcarrier spacing (SCS) per frequency range.

6. Method according to at least one of the previous claims,
wherein in non-consecutive assignments to the user equipment (UE) the step of determining of the scheduling bandwidth (SBW) comprises considering the whole bandwidth between the lowest and highest scheduled subcarrier (SC) as part of the maximum number of supported subcarriers.

7. Method at least one of the previous claims,
further comprising the step of transferring the ascertained capability information to a neighbor base station (BS) in the case of handover or multicarrier scheduling.

8. Method according to at least one of the previous claims,
further comprising the step of amending the applied subcarrier spacing (SCS) in consideration of the number of reduced capability user equipment (UE) operating in at least parts of the cellular network (CN).

9. Base station (BS) being part of a cellular network (CN), the base station (BS) serving a plurality of user equipments (UE), wherein the plurality of user equipments comprises those which are qualified as reduced capability user equipment (UE), and the base station (BS) is capable of applying at least one subcarrier spacing (UE) to a supported frequency band,
wherein for operating a reduced capability user equipment (UE) the base station (BS) is configured to:
- ascertain a capability information from said user equipment (UE) including an indication of maximum number of supported subcarriers (SC),
- determine the scheduling bandwidth (SBW) for said user equipment taking into account the indicated maximum number of supported subcarriers (SC) and the at least one subcarrier spacing (SCS),
- transfer information to said user equipment (UE) considering said determined scheduling bandwidth (SBW).

10. Base station (BS) according to claim 9,
configured to support at least two subcarrier spacings (SCS),
wherein in case a candidate scheduling bandwidth covers an area with more than one different subcarrier spacings (SCS),
for determining the scheduling bandwidth the base station (BS) is configured to take into account the smallest of the at least two subcarrier spacings (SCS).

11. Base station (BS) according to at least one of the claims 9 or 10,
wherein for determining the scheduling bandwidth the base station (BS) is configured to identify a plurality of subcarriers (SC) with slots that are free to be allocated to a user equipment (UE),
wherein the plurality of subcarriers considers the indicated maximum number of supported subcarriers (SC).

12. Base station (BS) according to at least one of the claims 9 to 11,
wherein the ascertained capability information additionally includes an information indicative at least of one of the group of:
- the maximum supported subcarrier spacing (SCS),
- the supported group of subcarrier spacings (SCS),
- a maximum required processing time,
- a supported fixed subcarrier spacing (SCS),
- supported subcarrier spacing (SCS) per frequency range.

13. Base station (BS) according to at least one of the claims 9 to 12,
wherein in non-consecutive assignments to the user equipment for determining of the scheduling bandwidth the base station is configured to consider the whole bandwidth between the lowest and highest scheduled subcarrier as part of the maximum number of supported subcarriers (SC).

14. Base station (BS) according to at least one of the claims 9 to 13,
further configured to transfer the ascertained capability information to a neighbor base station in the case of handover or multicarrier scheduling.

15. Method for a user equipment (UE) configured to operate with a base station (BS) being part of a cellular network (CN), the user equipment (UE) being qualified as reduced capability user equipment, the method comprises the steps of:
- submitting to said base station (BS) a capability information indicating a maximum number of supported subcarriers (SC),
- receiving from said base station (BS) an indication relating to determined scheduling bandwidth (SBW).

16. Method according to claim 15,
in case of receiving scheduling information incompatible with supported capabilities, submitting an message to the base station (BS) indicative of an error, in particular including correct capabilities.

17. User equipment (UE) configured to operate with a base station (BS) being part of a cellular network (CN), the user equipment (UE) being qualified as reduced capability user equipment, the user equipment further being configured to:
- submit to said base station (BS) a capability information indicating a maximum number of supported subcarriers,
- receive from said base station (BS) an indication relating to determined scheduling bandwidth.

18. Network element of a cellular network (CN), said network element maintaining a set of capability information assigned to a user equipment (UE) operating with a first base station (BS) of said cellular network (CN),
wherein the network element is configured to providing said set of capability information to a second base stations in case the user equipment (UE) is about to reselect to said second base station.
